(19) Europäisches Patentamt / European Patent Office / Office européen des brevets

(11) **EP 2 360 640 B1**

(12) **FASCICULE DE BREVET EUROPEEN**

(45) Date de publication et mention
de la délivrance du brevet:
**04.09.2013 Bulletin 2013/36**

(51) Int Cl.:
***G06T 7/00*** *(2006.01)*     ***G06T 7/40*** *(2006.01)*

(21) Numéro de dépôt: **11150007.0**

(22) Date de dépôt: **03.01.2011**

(54) **Procédé de détection d'orientation de contours**

Verfahren zur Detektion von Kantenorientierung

Method for edge orientation detection

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.01.2010 FR 1050034**

(43) Date de publication de la demande:
**24.08.2011 Bulletin 2011/34**

(73) Titulaires:
- **STMicroelectronics (Grenoble 2) SAS
  38000 Grenoble (FR)**
- **Institut Polytechnique de Grenoble
  38031 Grenoble Cedex 1 (FR)**
- **Université Pierre-Mendès France
  38400 Saint Martin d'Hères (FR)**

(72) Inventeurs:
- **Van Reeth, Eric
  38000 Grenoble
  (FR)**
- **Bertolino, Pascal
  38170 Seyssinet-Pariset (FR)**

- **Nicolas, Marina
  38340 Voreppe (FR)**

(74) Mandataire: **Casalonga, Axel
Casalonga & Partners
Bayerstrasse 73
80335 München (DE)**

(56) Documents cités:
**WO-A1-2004/104928    US-A- 6 167 150
US-B1- 6 788 826**

- **PERONA P: "ORIENTATION DIFFUSIONS", IEEE
  TRANSACTIONS ON IMAGE PROCESSING, IEEE
  SERVICE CENTER, PISCATAWAY, NJ, US LNKD-
  DOI:10.1109/83.661195, vol. 7, no. 3, 1 mars 1998
  (1998-03-01), pages 457-467, XP000738217, ISSN:
  1057-7149**
- **ERIC VAN REETH ET AL.: "Adaptive edge
  orientation analysis", PROCEEDINGS OF IS&T/
  SPIE ELECTRONIC IMAGING, vol. 7535, 17 janvier
  2010 (2010-01-17), pages 1-11, XP002598133, San
  Jose, USA DOI: 10.1117/12.838990**

EP 2 360 640 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne le traitement d'image, et plus particulièrement la détection d'orientation des contours dans une image.

Le traitement d'image est un sujet d'étude très développé. Plus particulièrement, la description de la géométrie des objets d'une image présente de nombreux intérêts pour les grands domaines d'application du traitement d'une image comme, par exemple, le débruitage, l'amélioration de la résolution, la compression, ou la restauration d'image en général.

Des techniques de plus en plus complexes ont été mises en oeuvre pour résoudre ces problèmes et obtenir des images de meilleure qualité. De nombreuses études ont ainsi révélé que la qualité d'une image est fortement corrélée à la qualité des contours.

Une évolution logique des procédés a été de rendre ces traitements adaptatifs au contenu de l'image. Ils permettent ainsi d'adapter les traitements de façon locale sur certaines zones d'image, en exploitant l'homogénéité de certains critères tels que les niveaux de gris, l'appartenance à une texture, ou l'appartenance à un contour.

La transformée en ondelettes d'un signal tel que le signal d'une image est un outil mathématique utilisé dans le traitement du signal. Une ondelette est une fonction comparable à une brève oscillation. C'est une fonction mathématique utilisée pour diviser une fonction ou un signal en temps continu en différentes composantes d'échelle correspondant à différentes bandes de fréquence. Chaque composante d'échelle peut alors être étudiée à la résolution adéquate.

Réalisant aussi bien une décomposition fréquentielle que temporelle, la transformée en ondelettes présente des avantages pour représenter des fonctions comprenant des discontinuités et/ou des pics étroits par rapport à la traditionnelle transformée de Fourier qui n'effectue qu'une décomposition en fréquence. La transformée en ondelettes présente aussi des avantages par rapport à la transformée de Fourier pour décomposer et recomposer des signaux finis, non périodiques ou non stationnaires.

La transformée en ondelettes est un outil très efficace pour l'étude des contours d'une image grâce à la séparation qu'il effectue entre les hautes et les basses fréquences mais surtout, grâce à la flexibilité qu'il offre au regard de l'adaptation à la résolution.

Transformer une image à l'aide de la transformée en ondelettes revient à la séparer dans deux domaines : un domaine d'approximation et un domaine de détail. Le domaine d'approximation comprend les basses fréquences de l'image correspondant aux composantes continues, alors que le domaine de détail comprend les hautes fréquences de l'image correspondant aux fortes variations définissant généralement un contour.

Grâce aux ondelettes, les méthodes d'analyse multi-résolution permettent de représenter des images dans des espaces pertinents. Les informations données par les approches multi-résolution sont fondamentales pour l'analyse d'images, et tout particulièrement pour étudier les caractéristiques des contours.

Des méthodes théoriques basées sur les ondelettes géométriques, visant à détecter l'homogénéité des niveaux de gris le long d'une direction, ont été créées. Des méthodes utilisant les « bandelettes », les « ridgelets » ou « curvelets », ou les « contourlets » ont ainsi été utilisées.

Toutes ces techniques se concentrent principalement sur l'utilisation de la régularité des coefficients d'ondelettes selon certaines directions pour améliorer différentes applications telles que le débruitage ou la compression par exemple.

Le document WO 2007/059795 décrit un procédé d'amélioration d'un signal en utilisant des bandelettes groupantes multi-échelles. Cette méthode ne réalise pas de choix de résolution, et utilise une segmentation itérative qui utilise un espace et un temps de calcul important. La méthode de réarrangement de pixels utilisée pour la détection de directions dans ce procédé présente des disfonctionnements entraînant l'apparition de directions privilégiées.

Le document « The curvelet transform for image denoising » écrit par JL Starck et al. et publié dans la revue scientifique IEEE (vol. 11, n°6, juin 2002) décrit l'utilisation de « curvelets » qui utilisent la transformée en ondelettes à trou, et réalisent une décomposition fréquentielle de l'image, mais qui ne réalisent pas de choix de résolution, ni de choix de direction de contours, ni de segmentation en fonction d'une résolution adaptée au détail. La technique décrite dans ce document n'est adaptée qu'à certains types de traitements d'image tels que la réduction de bruit. En revanche, cette technique n'est pas adaptée à des traitements d'image de type encodage ou interpolation, du fait qu'elle ne permet ni un choix de résolution, ni un choix de direction.

Certaines techniques de création de flot géométrique n'utilisant pas les ondelettes ont également été précédemment étudiées. Ainsi, dans le document « Orientation diffusions » rédigé par P. Perona et publié dans la revue scientifique IEEE (vol.7, n°3, Mars 1998) est décrite une approche n'utilisant pas la transformée en ondelettes, mais les niveaux de gris. La méthode itérative décrite est basée sur la diffusion des orientations des gradients d'une image. Cette approche ne permet pas d'avoir une vision globale du contour, et les discontinuités restent difficilement détectables.

les documents US6167150 et US6788826 B1 décrivent un procédé de détection d'orientations des contours dans une image en utilisant une transformée en ondelette multi-résolution. Cependant, ils ne décrivent pas une segmentation de l'image en une pluralité de blocs, ni la détermination d'une résolution optimale pour chaque bloc.

Le document WO2004/104928 A1 décrit une méthode de segmentation d'une image en une pluralité de bloc afin de détecter une direction de contour pour chaque bloc. In ne divulgue pas l'utilisation d'une transformée multi-résolution, ni la détermination d'une résolution optimale pour chaque bloc.

Selon un mode de mise en oeuvre et de réalisation, il est proposé de combiner les approches multi-résolution d'ondelettes avec une méthode d'analyse directionnelle pour en obtenir un flot directionnel précis et non biaisé des contours d'une image. La méthode d'analyse directionnelle utilise une segmentation adaptative et est non itérative de manière à permettre éventuellement un gain de temps de calcul et une parallélisation du calcul.

Selon un aspect, il est proposé, dans un mode de mise en oeuvre, un procédé de détection d'orientation des contours dans une image.

Ce procédé comprend les étapes suivantes :

- une transformation initiale de l'image en utilisant une transformée multi-résolution non décimée, telle que, par exemple, une transformée en ondelettes « à trou » ou une pyramide laplacienne, la transformation non décimée permettant la séparation de l'approximation et des détails de l'image.
- une segmentation de l'image en une pluralité de blocs, lesdits blocs pouvant être de même dimension,
- une détermination de la résolution optimale pour chaque bloc,
- une détection de la direction de contour prépondérante pour chacun desdits blocs.

Dans un mode de mise en oeuvre, les blocs constituent des blocs primaires issus d'une segmentation primaire de l'image. On détecte alors la direction prépondérante du contour pour chaque bloc primaire.

Les blocs peuvent avoir des formes diverses comme une forme carrée, rectangulaire, ou en losange. L'utilisation de blocs carrés permet de représenter toutes les directions de manière homogène.

Les blocs peuvent également constituer des blocs divisionnaires résultant d'une division initiale des blocs primaires, et l'on détache alors la direction de contour prépondérante pour chaque bloc divisionnaire.

Avantageusement, la détermination de la résolution optimale peut comprendre au moins une seconde transformée multi-résolution non décimée de l'image, chaque transformée multi-résolution non décimée de l'image correspondant à une échelle.

En répétant la transformée multi-résolution non décimée, telle qu'une transformée en ondelettes « à trous », sur les images d'approximation obtenues, on obtient une description fréquentielle de l'image à différentes résolutions. La résolution de l'image transformée décroît avec le nombre de répétitions de la transformée, le nombre de répétitions correspondant à l'échelle.

La transformée multi-résolution non décimée utilisée peut être une transformée dyadique, ce qui implique dans ce cas que la résolution est divisée par deux à chaque échelle, c'est-à-dire à chaque transformée. Si J est l'échelle d'une transformée multi-résolution non décimée, l'échelle correspondant au nombre de transformées que l'image a subies, la résolution des espaces transformés décroît en $2^{-J}$.

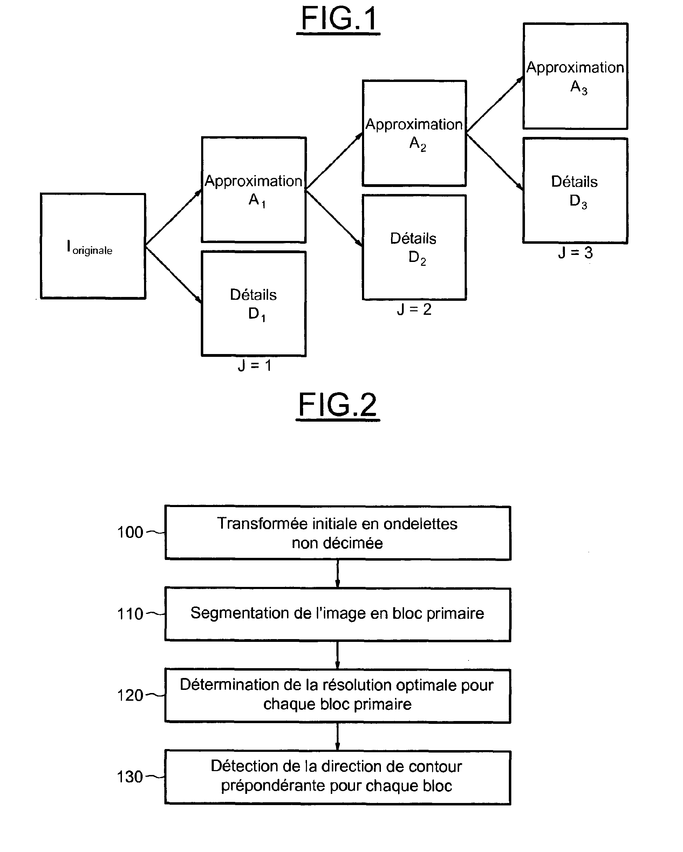

Sur la figure 1 a été représenté un schéma d'une décomposition multi-résolution non décimée, telle qu'une transformée en ondelettes à trous utilisée ici pour la détermination de la résolution optimale. Dans le cas où une transformée multi-résolution non décimée dyadique est utilisée pour la décomposition, la résolution optimale sera de la forme $2^{-Jopt}$.

Sur cette figure, est représenté un exemple de décomposition d'image à trois niveaux, c'est-à-dire aux échelles $J=1$, $J=2$ et $J=3$. Il est possible de réaliser des décompositions d'image à n niveaux, n au moins égal à 1. Chaque image de détail $D_1$, $D_2$ et $D_3$ fait ressortir des contours à une bande de fréquences particulière. Par exemple, les parties haute fréquence de l'image, telles que des contours fins, apparaissent dans la première image de détail $D_1$ à la résolution $2^{-1}$ la plus fine pour une transformée dyadique, alors que les contours basse résolution tels que des contours plus larges, apparaissent plus fortement dans la troisième image $D_3$ de détail à la résolution $2^{-3}$ plus grossière pour une transformée dyadique.

L'utilisation d'une décomposition multi-résolution non décimée, c'est-à-dire non sous-échantillonnée, telle qu'une transformée en ondelettes « à trous », permet de conserver la même taille d'image à toutes les résolutions. Ainsi, sont introduites à basse résolution des redondances qui sont utilisées comme information additionnelle pour décider de l'orientation d'un contour.

La détermination de la résolution optimale pour un bloc comprend préférentiellement un calcul d'une amplitude des coefficients de détails pour chaque résolution, et une sélection de la résolution optimale correspondant à la résolution pour laquelle l'amplitude des coefficients de détails est maximale.

La détermination de la résolution optimale est réalisée de préférence pour un bloc primaire issu d'une segmentation primaire.

Dans un cas où une transformée en ondelettes est utilisée comme transformée multi-résolution non décimée, les coefficients d'ondelettes de la transformée en ondelettes correspondent aux coefficients de détails.

En choisissant localement la résolution la plus adaptée à chaque contour, la direction du contour s'en trouve précisée. Pour cela l'image, et plus particulièrement l'image de détail, est segmentée en blocs primaires, par exemple en carrés de 16 pixels par 16 pixels. Il est alors possible de choisir la meilleure résolution pour chaque bloc, en fonction du type de détail existant au sein du bloc.

Pour déterminer la résolution adaptée pour un bloc, l'amplitude des coefficients de détails est calculée pour chaque résolution en calculant, par exemple, la différence entre le coefficient de détails maximum et le coefficient de détails minimum pour un bloc à une résolution. La résolution optimale d'un bloc est alors celle pour laquelle les coefficients de détails ont l'amplitude la plus élevée. Cette approche simple et rapide permet d'obtenir des résultats beaucoup plus précis lors de la détection de directions des contours puisque chaque contour est représenté à sa résolution optimale.

De préférence, la détection de la direction de contours prépondérante d'un bloc comprend :

a) une détection d'une direction principale du bloc,
b) un test de satisfaction d'un critère de direction pour ledit bloc,
c) une sélection de la direction principale comme direction prépondérante dudit bloc si le critère de direction est satisfait,
d) une segmentation dudit bloc en quatre blocs divisionnaires carrés égaux, si le critère de direction n'est pas satisfait à l'étape b),
e) une réitération des étapes a) à d) jusqu'à satisfaction du critère de direction.

Ainsi, il est possible de segmenter les blocs successivement de manière à obtenir une direction prépondérante pour un bloc satisfaisant le critère de direction, les blocs pouvant être de tailles différentes.

De préférence, la détection d'une direction principale d'un bloc comprend :

- une création d'une séquence de pixels pour chaque direction possible dans ledit bloc,
- un calcul d'un critère d'homogénéité pour chaque séquence de pixels,
- une sélection de la direction principale dudit bloc, la direction principale correspondant à la direction pour laquelle le critère d'homogénéité de la séquence de pixels correspond à une homogénéité maximale.

Selon la façon dont est défini le critère du point de vue mathématique, pour correspondre à une homogénéité maximale, le critère d'homogénéité peut être minimal ou maximal.

Le critère d'homogénéité d'une direction d'un bloc correspond à l'homogénéité des pixels dudit bloc selon ladite direction, c'est-à-dire préférentiellement à l'intégration sur ledit bloc des valeurs absolues des gradients de coefficient de détails le long de ladite direction.

Soit $d(\theta)$ la somme des valeurs absolues des différences calculée entre deux valeurs de pixels successifs d'une séquence de pixels $S(\theta)$ à une dimension. Pour une séquence de taille $N^2$, issue d'un bloc carré de N pixels de côté, on a donc :

$$d(\theta) = \sum_{i=1}^{N^2-1} |S(\theta)[i+1] - S(\theta)[i]| \qquad (1)$$

La direction $\theta$ recherchée correspond à la direction qui minimise $d(\theta)$. C'est celle pour laquelle la séquence présente le moins de discontinuités, et donc celle qui a le plus de chances d'être la direction du contour dominant.

La séquence de pixels créée pour chaque direction possible peut éventuellement tenir compte des sauts de ligne pour chaque direction, cela en modifiant en conséquence l'équation 1. Ainsi, le critère d'homogénéité n'est calculé pour chaque séquence de pixels qu'à partir des pixels consécutifs, hors sauts de ligne, dans le bloc selon une direction. Un facteur de normalisation adéquat est alors appliqué.

De préférence, pour calculer le critère d'homogénéité d'une séquence, on réalise au préalable un nombre de transformées en ondelettes orthogonales de la séquence, comme une transformée en ondelettes de Haar par exemple, correspondant au nombre correspondant à l'échelle du bloc auquel est soustrait un.

Il est préférable de calculer $d(\theta)$ non pas sur les séquences de pixels mais sur les transformées en ondelettes. Le choix de la résolution à laquelle est transformée $S(\theta)$ est lié au niveau de résolution du bloc à l'origine de la séquence.

Ainsi, les séquences contenant des coefficients d'ondelettes à la résolution $2^{-1}$, soit l'échelle J=1, ne seront pas transformées, alors que les séquences aux autres résolutions $2^{-2}$ et $2^{-3}$ soit les échelles J=2 et J=3, seront transformées respectivement une et deux fois.

La notion de continuité le long d'une direction $\theta$ peut donc être calculée de la manière suivante au travers du calcul du critère d'homogénéité, avec $WT_J(S(\theta))$ la transformée en ondelettes orthogonale de $S(\theta)$ à la résolution $2^{-J}$.

$$G_{dir}(\theta) = \sum_{i=1}^{N^2-1} \left| WT_{J-1}\left(S(\theta)[i+1]\right) - WT_{J-1}\left(S(\theta)[i]\right) \right| \qquad (2)$$

L'angle θ associé au bloc est celui qui minimise la valeur de $G_{dir}(\theta)$.

De préférence, le critère de direction d'un bloc comprend une taille de bloc minimale et/ou un critère d'homogénéité inférieur à un seuil d'homogénéité.

Un bloc est donc segmenté en quatre blocs divisionnaires si le critère d'homogénéité est supérieur au seuil d'homogénéité, c'est-à-dire si la direction principale détectée n'est pas considérée comme prépondérante du fait qu'il existe, par exemple, plus d'une direction de contour dans le bloc. Le bloc ne sera pas segmenté en revanche si le critère d'homogénéité est inférieur au seuil d'homogénéité, et/ou si la taille du bloc considéré est égale à la taille minimale de bloc.

Le seuil d'homogénéité d'un bloc peut avantageusement correspondre à l'intégration sur ledit bloc des valeurs absolues des gradients intrinsèques de coefficients de détails du bloc tels que les gradients verticaux et horizontaux de coefficients de détails.

La prise en compte combinée des gradients intrinsèques de coefficients de détails tels que les gradients verticaux et horizontaux dans le seuil d'homogénéité permet d'éviter une non détection des contours horizontaux ou verticaux.

Une autre solution consisterait par exemple à utiliser les gradients diagonaux correspondant aux directions +45° et -45°.

La création d'une séquence de pixels pour une direction dans ledit bloc est préférentiellement réalisée à partir d'un algorithme chaînant des pixels voisins, tel que l'algorithme de Bresenham.

L'utilisation de l'algorithme de Bresenham, pour trouver l'enchaînement à réaliser, permet de minimiser à chaque étape l'erreur commise par rapport à la droite continue représentant le même angle, enchaînant des pixels voisins.

On peut également utiliser d'autres algorithmes que celui de Bresenham, dès lors qu'ils sont basés sur un enchaînement de pixels voisins visant à minimiser l'erreur commise par rapport à la droite continue, cette minimisation ne se faisant pas alors pas à pas mais sur un segment de droite

Cela permet en outre d'éviter l'apparition de directions privilégiées lors de la détection. L'enchaînement de pixels voisins est également plus représentatif de la façon dont sont représentées des droites dans des images naturelles.

Le nombre de droites de Bresenham que l'on peut créer à l'intérieur d'une région augmente avec la taille de la région. La résolution angulaire croît donc avec la taille de la région puisque le nombre d'angles que l'on peut discriminer est plus important. De plus, le fait de rechercher la direction dominante sur un grand nombre de pixels augmente la robustesse du résultat par rapport à d'éventuels bruits ou directions parasites.

Selon un autre aspect, il est proposé dans un mode de réalisation, un système de détection d'orientation des contours dans une image.

Il comprend avantageusement des moyens de transformation initiale de l'image aptes à réaliser une transformation multi-résolution non décimée de l'image, des moyens de segmentation aptes à segmenter l'image en une pluralité de blocs , des moyens de détermination de la résolution optimale pour chaque bloc, des moyens de détection de la direction de contour prépondérante pour chacun desdits blocs.

Avantageusement, les moyens de détermination de la résolution optimale comprennent des moyens de transformations supplémentaires aptes à réaliser au moins une seconde transformée multi-résolution non décimée de l'image, chaque transformée multi-résolution de l'image correspondant à une échelle.

De préférence, les moyens de détermination de la résolution optimale comprennent des premiers moyens de calcul aptes à calculer une amplitude des coefficients de détails pour chaque résolution, et des premiers moyens de comparaison aptes à comparer les amplitudes des coefficients de détails et à sélectionner la résolution optimale correspondant à la résolution pour laquelle l'amplitude des coefficients de détails est maximale.

Les moyens de détection de la direction de contour prépondérante d'un bloc peuvent avantageusement comprendre des moyens de détection d'une direction principale du bloc, des moyens de test de satisfaction d'un critère de direction pour ledit bloc, des moyens de segmentation dudit bloc en quatre blocs divisionnaires.

De préférence, les moyens de détection d'une direction principale d'un bloc comprennent des moyens de création d'une séquence de pixels pour chaque direction possible dans ledit bloc, des seconds moyens de calcul aptes à calculer un critère d'homogénéité pour chaque séquence de pixels, des seconds moyens de comparaison aptes à comparer les critères d'homogénéités d'un bloc et à sélectionner la direction principale dudit bloc, la direction principale correspondant à la direction pour laquelle le critère d'homogénéité de la séquence de pixels correspond à une homogénéité maximale.

Les seconds moyens de calcul comprennent préférentiellement des moyens aptes à réaliser un nombre de transformée en ondelettes orthogonale de la séquence correspondant au nombre correspondant à l'échelle du bloc auquel est soustrait un.

Les moyens de test de satisfaction peuvent avantageusement comprendre des troisièmes moyens de calculs aptes à calculer un seuil d'homogénéité correspondant à l'intégration sur ledit bloc des valeurs absolues des gradients intrinsèques de coefficients de détails du bloc tels que les gradients verticaux et horizontaux de coefficients de détails.

Les moyens de test de satisfaction comprennent des troisièmes moyens de comparaison aptes à comparer le critère d'homogénéité délivré par les seconds moyens de comparaison au seuil d'homogénéité et à comparer la taille du bloc à un seuil minimal de taille de bloc.

Avantageusement, les moyens de création d'une séquence de pixels pour une direction dans ledit bloc peuvent comprendre des moyens aptes à construire une séquence de pixels à partir d'un algorithme chaînant des pixels voisins, tel que l'algorithme de Bresenham.

D'autres avantages et caractéristiques de l'invention apparaîtront à l'examen de la description détaillée de modes de réalisation et de mise en oeuvre, nullement limitatifs, et des dessins annexés sur lesquels :

- la figure 1, déjà décrite, représente de manière schématique une succession de décompositions multi-résolution non décimées;
- la figure 2 représente schématiquement selon un mode de mise en oeuvre un procédé de détection d'orientation des contours dans une image ;
- la figure 3 illustre de manière schématique un procédé de détermination de la résolution optimale pour chaque bloc primaire, selon un mode de mise en oeuvre ;
- la figure 4 illustre de manière schématique un procédé de détection de la direction de contours prépondérante pour chaque bloc, selon un mode de mise en oeuvre ;
- les figures 5a et 5b illustrent de manière schématique la création d'une séquence de pixels à une dimension selon une direction donnée pour un bloc ;
- la figure 6 illustre le tracé du critère d'homogénéité en fonction de l'angle de la direction de contours pour un bloc ;
- les figures 7a et 7b illustrent de manière schématique un découpage optimal en blocs de différentes dimensions obtenu pour une image ;
- les figures 8a et 8b présentent une méthode de création de séquence de pixels à une dimension selon l'art antérieur,
- les figures 9a et 9b illustrent le phénomène de directions privilégiées observé en utilisant la création de pixels de l'art antérieur,
- la figure 10 présente, de manière schématique,un mode de réalisation d'un système de détection d'orientation des contours dans une image.

La figure 2 représente, de manière schématique, un procédé de détection d'orientation des contours dans une image selon un mode de mise en oeuvre.

Ce procédé comprend une étape initiale 100 de transformation de l'image en utilisant, dans l'exemple illustré ici, une transformée en ondelettes non décimée.

La transformée en ondelettes est une fonction mathématique plus ou moins oscillante et de moyenne nulle, choisie comme outil d'analyse et de reconstruction multi-échelle. L'utilisation d'une transformée en ondelettes non décimée, c'est-à-dire non sous-échantillonnée, telle qu'une transformée en ondelettes « à trous », permet de conserver la même taille d'image à toutes les résolutions et donc le même nombre de pixels à toutes les résolutions.

Le procédé comprend ensuite une étape 110 de segmentation d'image dans laquelle l'image est segmentée, dans l'exemple présenté ici, en blocs primaires carrés de mêmes dimensions. Ces blocs primaires sont de préférence divisibles en quatre blocs divisionnaires carrés égaux. La taille du bloc primaire est choisie maximale tout en espérant raisonnablement isoler au plus un objet de l'image par bloc. En effet, si le bloc primaire est un carré de 4 pixels, il ne pourra être théoriquement divisé qu'une seule fois en quatre blocs divisionnaires d'un pixel. En revanche un bloc primaire de 16x16 pixels pourra être divisé une première fois en quatre blocs de 8x8 pixels qui pourront également être divisé une fois en quatre blocs de 4x4 pixels. Une taille de bloc divisionnaire inférieure à 4x4 pixels est peu pertinente, puisqu'elle apporte très peu de visibilité sur la direction du contour.

Dans une étape suivante 120, on détermine la résolution optimale pour chaque bloc primaire. Ainsi, pour chaque bloc primaire issu de la segmentation d'image de l'étape précédente 110, un processus est mis en oeuvre pour déterminer la résolution optimale pour le ou les contours contenus dans un bloc primaire.

Enfin, dans une dernière étape 130, on détecte la direction du contour prépondérant pour chaque bloc, les blocs considérés pouvant être des blocs primaires ou des blocs divisionnaires issus d'au moins une division du bloc primaire. La division est itérée de manière à n'avoir qu'une seule direction de contour par bloc.

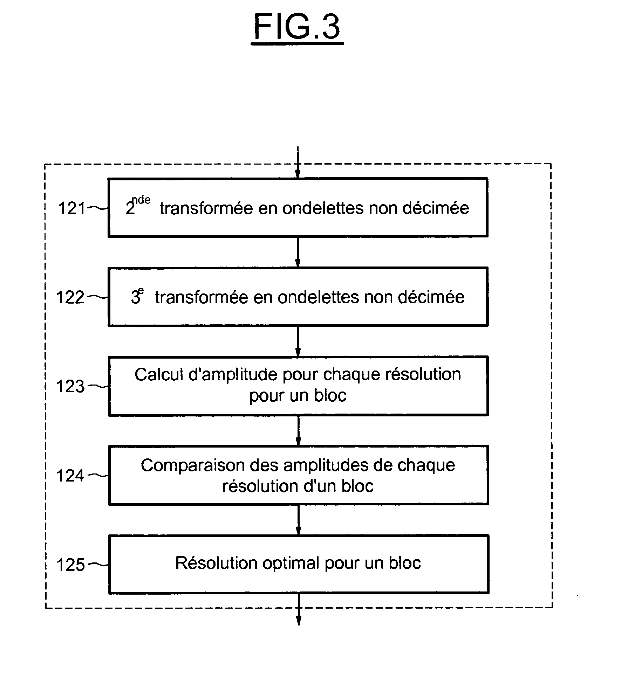

La figure 3 illustre de manière schématique un procédé de détermination de la résolution optimale pour chaque bloc selon un mode de mise en oeuvre, et plus particulièrement dans cet exemple de chaque bloc primaire.

Dans cet exemple, on réalise, dans les étapes 121 et 122, deux transformées en ondelettes non décimées supplémentaires successives sur chacune des images approximatives obtenues. A l'issue de l'étape 122, on obtient ainsi une description fréquentielle à trois résolutions différentes issues des première, seconde et troisième transformées en ondelettes non décimées.

La transformée dans l'espace des détails utilisée est une transformée non décimée. Dans l'exemple une transformée dyadique est utilisée. Par conséquent, la résolution est donc divisée par deux à chaque échelle, c'est-à-dire à chaque transformée. Si J est l'échelle d'une transformée en ondelettes, l'échelle correspondant au nombre de transformées que l'image a subies, la résolution des espaces transformés décroît en $2^{-J}$.

Dans une étape suivante 123, on calcule l'amplitude des coefficients d'ondelettes pour chaque résolution pour un même bloc primaire. En choisissant localement la résolution la plus adaptée à chaque contour, la direction du contour s'en trouvera précisée. L'image de détail est segmentée en blocs primaires carrés de, par exemple, 16 pixels par 16 pixels. Il est alors possible de choisir la meilleure résolution pour chaque bloc, en fonction du type de détail existant au sein du bloc.

Pour un bloc, l'amplitude des coefficients d'ondelettes, qui correspondent dans cet exemple aux coefficients de détails, est calculée pour chaque résolution en calculant par exemple la différence entre le coefficient d'ondelettes maximum et le coefficient d'ondelettes minimum.

Dans une étape suivante 124, on compare alors pour un même bloc les amplitudes des coefficients d'ondelettes obtenues pour chaque résolution.

Dans une étape finale 125, on sélectionne la résolution optimale du bloc correspondant à la résolution pour laquelle l'amplitude des coefficients d'ondelettes est maximale.

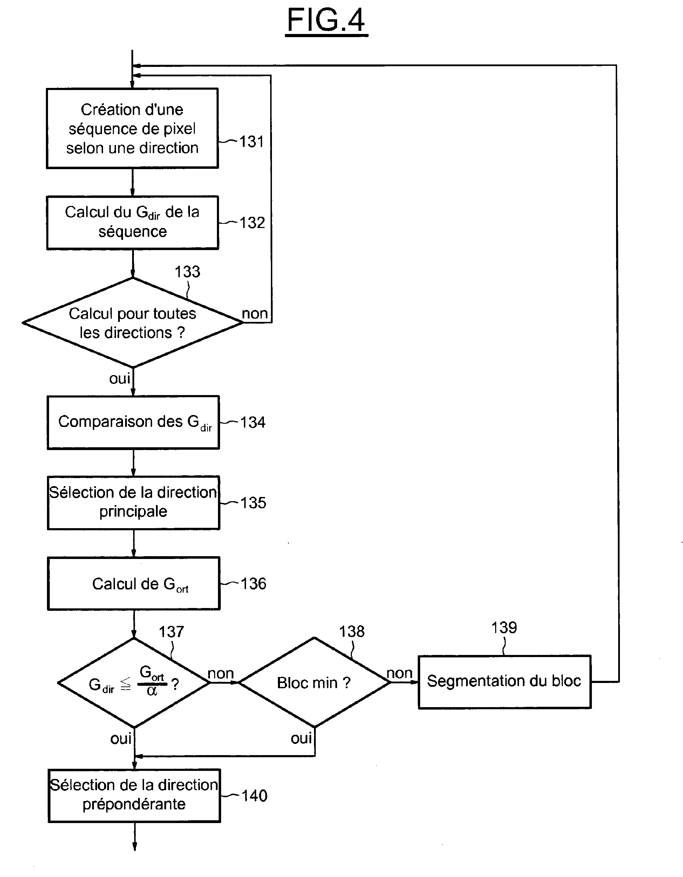

Sur la figure 4, est illustrée de manière schématique, une détection de la direction de contours prépondérante pour chaque bloc selon un mode de réalisation.

Dans une première étape 131, on crée une séquence de pixels à une dimension selon une direction donnée à partir des pixels composant le bloc à deux dimensions étudié.

La séquence de pixels notée S(θ) est donc une séquence de pixels consécutifs représentative de la direction θ, tenant compte éventuellement des sauts de ligne, contenant tous les pixels du bloc étudié. Cette séquence de pixels est créée à l'aide d'un algorithme de création de droite discrète, comme, par exemple, celui de Bresenham.

Dans cet exemple, l'algorithme de Bresenham est choisi pour trouver un enchaînement à réaliser car ce dernier a la propriété de minimiser à chaque étape l'erreur commise par rapport à la droite continue représentant le même angle, en chaînant des pixels voisins.

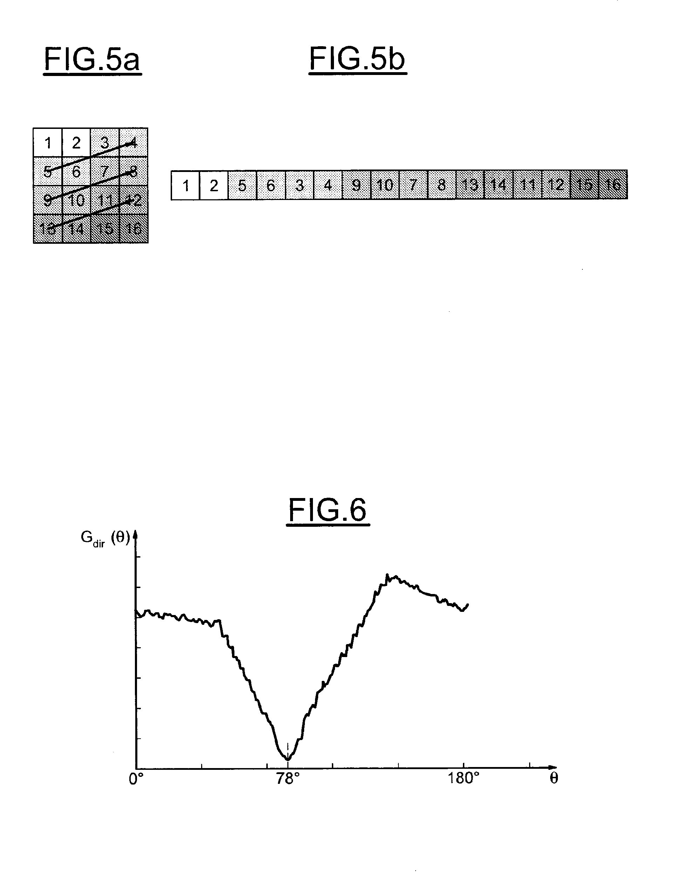

Un exemple d'une création d'une séquence de pixels à une dimension est donné sur les figures 5a et 5b. On peut voir la transformation d'un bloc de pixels à deux dimensions, présenté sur la figure 5a, en une séquence de pixels à une dimension, présenté sur la figure 5b, suivant une direction θ représentée par les flèches.

L'algorithme de Bresenham permet ainsi de chaîner les pixels voisins le long d'une direction θ.

Il est intéressant de noter que le nombre de droites de Bresenham que l'on peut créer à l'intérieur d'un bloc augmente avec la taille du bloc. La résolution angulaire croît donc avec la taille du bloc puisque le nombre d'angles que l'on peut discriminer est plus important. De plus, le fait de rechercher la direction dominante sur un grand nombre de pixels augmente la robustesse du résultat à d'éventuels bruits ou directions parasites.

Dans une seconde étape 132, on calcule un critère d'homogénéité ($G_{dir}$) de la séquence. Le critère d'homogénéité d'une direction d'un bloc correspond, dans cet exemple, à l'homogénéité des pixels dudit bloc selon la direction, c'est-à-dire à l'intégration sur ledit bloc des valeurs absolues des gradients de coefficient d'ondelettes le long de ladite direction.

Dans la séquence créée par l'algorithme de Bresenham, comme illustré sur la figure 5b, les sauts de ligne peuvent être pris en compte dans le calcul du critère d'homogénéité. Dans ce cas, les gradients de coefficient d'ondelettes sont donc calculés pour deux pixels consécutifs selon la direction dans un bloc. Le gradient de deux pixels consécutifs dans la séquence mais appartenant à deux lignes différentes, donc étant positionnés de part et d'autre d'un saut de ligne, ne sera pas calculé.

Pour calculer le critère d'homogénéité d'une séquence, on réalise au préalable un nombre de transformées en ondelettes orthogonales de la séquence, comme des transformées en ondelettes de Haar par exemple, correspondant au nombre correspondant à l'échelle du bloc auquel est soustrait un.

Ainsi, les séquences contenant des coefficients d'ondelettes à la résolution $2^{-1}$, soit l'échelle J=1, ne seront pas transformées, alors que les séquences aux autres résolutions $2^{-2}$ et $2^{-3}$ soit les échelles J=2 et J=3, seront transformées respectivement une et deux fois.

La notion de continuité le long d'une direction θ est donc calculée de la manière suivante au travers du calcul du critère d'homogénéité, avec $WT_J(S(θ))$ la transformée en ondelettes orthogonale de S(θ) à la résolution $2^{-J}$.

$$G_{dir}(\theta) = \sum_{i=1}^{N^2-1} \left| WT_{J-1}\big(S(\theta)[i+1]\big) - WT_{J-1}\big(S(\theta)[i]\big) \right| \qquad (2)$$

Dans une étape suivante 133, on vérifie que le calcul du critère d'homogénéité d'une direction a été réalisé pour toutes les directions possibles du bloc. Si cela n'est pas le cas, alors on recommence les étapes 131 et 132 pour une direction différente et ceci jusqu'à ce que toutes les directions possibles du bloc aient été réalisées.

Une fois les séquences de pixels créées pour toutes les directions possibles dans le bloc et les critères d'homogénéité calculés pour toutes les directions, on compare, dans une étape 134, les critères d'homogénéité ainsi calculés.

Il est possible de réaliser la recherche du minimum parallèlement au calcul du critère d'homogénéité $G_{dir}(\theta)$ avec une actualisation pas à pas du minimum.

Dans une étape suivante 135, on sélectionne alors la direction principale du bloc, la direction principale correspondant à la direction pour laquelle le critère d'homogénéité ($G_{dir}(\theta)$) de la séquence de pixels est minimal.

Sur la figure 6, est illustré un exemple de tracé des critères d'homogénéité $G_{dir}(\theta)$ pour un bloc. Le minimum est atteint pour un angle $\theta=78°$ qui correspond dans cet exemple à la direction principale.

Dans une étape suivante 136, on calcule alors un seuil d'homogénéité $G_{ort}$ d'un bloc correspondant dans cet exemple à l'intégration sur ledit bloc des valeurs absolues des gradients verticaux et horizontaux de coefficients d'ondelettes.

Dans une étape suivante 137, on compare le critère d'homogénéité $G_{dir}$ de la direction principale sélectionné dans l'étape 135 à une fraction du seuil d'homogénéité $G_{ort}$ calculé dans l'étape 136. Dans cet exemple, le seuil d'homogénéité est divisé par $\alpha$, $\alpha$ pouvant être par exemple égal à 5.

Si le critère est respecté, c'est-à-dire si l'inéquation est vérifiée à l'étape 137, alors on sélectionne dans une étape 140 la direction prépondérante du bloc qui correspond à la direction principale sélectionnée dans l'étape 135.

En revanche, si la condition de l'étape 137 n'est pas vérifiée, on vérifie dans une étape suivante 138 que la taille du bloc étudié n'a pas atteint la taille minimale de bloc, comme par exemple une taille minimale de 4x4 pixels.

Si la taille de bloc correspond à la taille de bloc minimale, alors on passe à l'étape 140 de sélection de la direction prépondérante.

Sinon, une segmentation du bloc est réalisée dans une étape suivante 139, de sorte à diviser le bloc en quatre blocs divisionnaires carrés de dimensions égales. Une fois le bloc segmenté en quatre blocs carrés, on retourne à la première étape 131 et on effectue à nouveau le procédé de détection de la direction de contours prépondérante pour chacun des blocs divisionnaires réalisés et ceci de manière indépendante, jusqu'à obtenir une direction prépondérante pour chacun des blocs obtenus au final.

Dans un autre mode de mise en oeuvre, la séquence de pixels n'est pas recalculée à chaque division, mais est déduite de la séquence de pixels du bloc primaire. Ilen va de même du calcul du critère d'homogénéité $G_{dir}(\theta)$ qui est déduit du critère d'homogénéité $G_{dir}(\theta)$.

Il est possible d'obtenir une image divisée en blocs de différentes tailles, chaque bloc ayant une seule direction prépondérante.

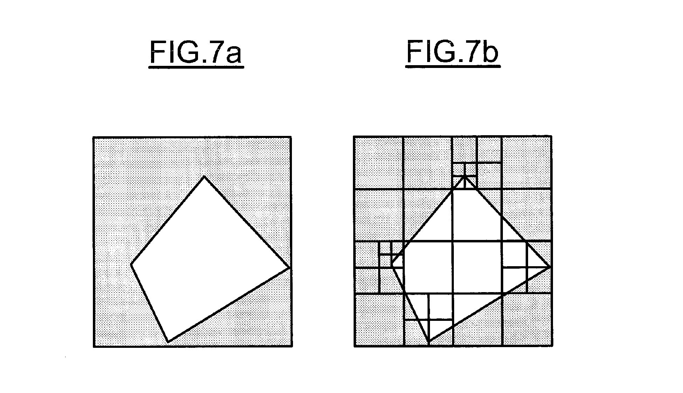

Sur les figures 7a et 7b est illustrée une segmentation d'une image en blocs primaires et blocs divisionnaires. La division de l'image en blocs de tailles différentes est réalisée de sorte à n'obtenir au plus qu'une seule direction de contour dans un bloc. L'image 7a est tout d'abord divisée en blocs primaires de taille identique, puis chaque bloc primaire est analysé pour détecter une direction principale.

Chaque bloc primaire comprenant plus d'une direction de contour est divisé en quatre blocs divisionnaires carrés égaux. Chacun de ces quatre blocs divisionnaires est à son tour analysé pour détecter une direction principale.

Si un des blocs divisionnaires comprend plus d'une direction de contour, ce bloc est alors segmenté en blocs divisionnaires plus petits. Dans l'exemple illustré, un bloc primaire carré est divisé, au besoin, en quatre blocs divisionnaires carrés égaux plus petits.

Ce processus de segmentation est opéré jusqu'à ce que le critère d'homogénéité soit inférieur au seuil d'homogénéité, ce qui correspond à une forte probabilité d'avoir une seule direction de contour dans le bloc, ou que le bloc ait atteint une taille considérée comme minimale.

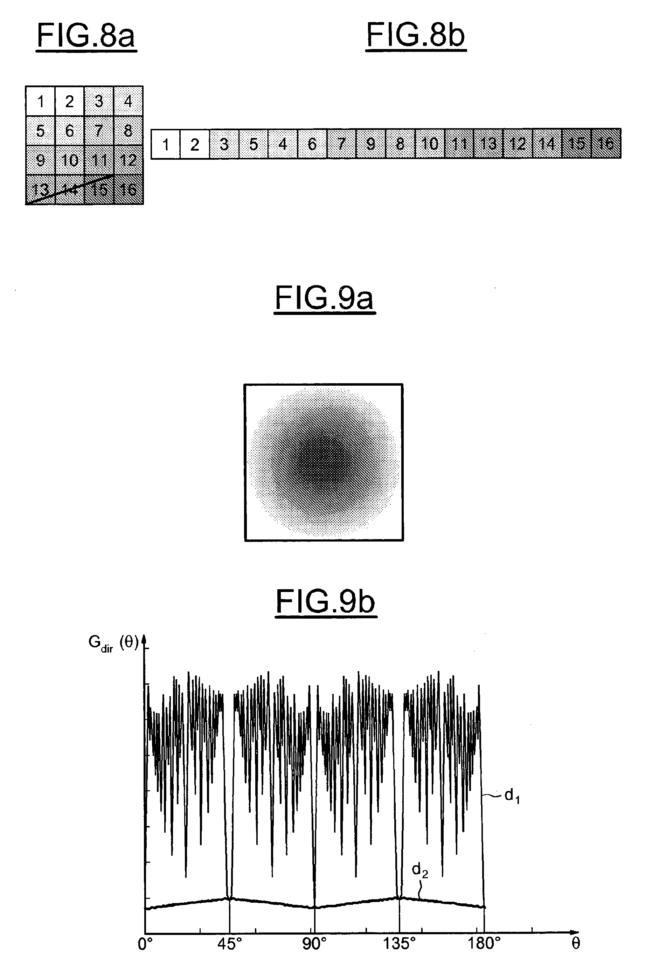

Sur les figures 8a et 8b est illustrée une approche similaire, mais néanmoins différente, de construction de séquence de pixels utilisée dans le document de Mallat utilisant les bandelettes. Une direction unique est associée à chaque bloc, cependant, au lieu de chaîner les pixels voisins d'un bloc le long d'une ligne directrice, comme dans le cas d'un chaînage des pixels voisins le long d'une ligne de Bresenham, une matrice de rotation est appliquée à la matrice comprenant les indices du bloc. Soit $\omega$ l'angle de rotation, les pixels sont chaînés par ordre de proximité par rapport à la ligne continue d'angle $\omega$.

On peut noter que, contrairement à Bresenham, les pixels chaînés ne sont plus voisins, mais les séquences de pixels restent semblables en terme de couleurs.

La méthode utilisée pour créer la séquence de pixels de la figure 8b n'est pas une méthode optimale pour détecter les directions de par le fait que la méthode a tendance à détecter trop souvent des directions nommées « directions de bases », c'est-à-dire 0°, 45°, 90° ; 135°, 180°.

Ce phénomène peut être observé sur les figures 9a et 9b, pour lesquelles la détection de direction de contours est appliquée à un cercle flou.

On s'attend à ce qu'aucune direction ne soit privilégiée et que la représentation graphique du critère d'homogénéité $G_{dir}(\theta)$ soit plate, montrant ainsi qu'il y a la même homogénéité.

La courbe $d_1$ représente la représentation graphique du critère d'homogénéité $G_{dir}(\theta)$ obtenue en utilisant la méthode de création de séquence de pixels de l'art antérieur, soit celle n'utilisant pas les droites chaînant des pixels voisins, tels que les droites de Bresenham, pour toutes les directions. Contrairement à ce qui est attendu, on observe des pics de minima pour les quatre directions de bases, ce qui indique que les directions de base ont une probabilité plus forte d'être détectées.

Cet effet est dû au fait que pour des angles de bases, les pixels chaînés sont géographiquement plus proches les uns des autres que pour d'autres directions. Ceci a pour conséquence qu'à l'intérieur d'un bloc, des enchaînements de pixels plus corrects peuvent être obtenus pour les directions « de base », contrairement aux enchaînements moins corrects obtenus pour des directions non basiques.

La courbe $d_2$ représente la représentation graphique du critère d'homogénéité $G_{dir}(\theta)$ obtenue selon l'invention, utilisant donc un algorithme chaînant les pixels voisins tel que l'algorithme de Bresenham, pour toutes les directions. La courbe obtenue n'est pas parfaitement plate, mais les défauts observés sont bien moindres par rapport à l'art antérieur.

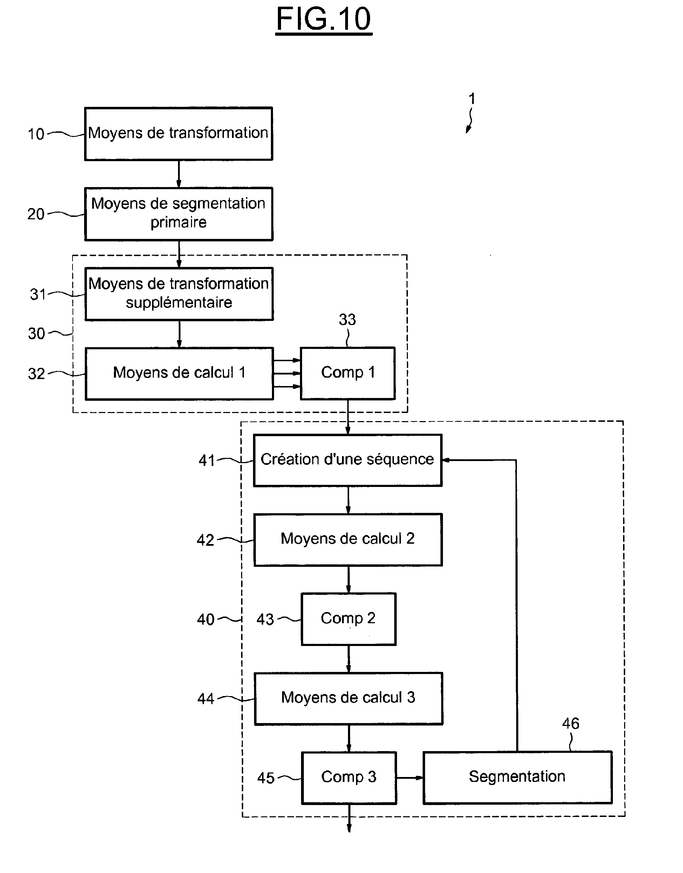

Figure 10 présente de manière schématique un mode de réalisation d'un système 1 de détection d'orientation de contours dans une image.

Le système 1 comprend des moyens 10 de transformation initiale de l'image qui réalisent une transformation en ondelettes non décimée de l'image ou, de manière générale, une transformation multi-résolution. Il comprend également des moyens 20 de segmentation primaire divisant l'image en une pluralité de blocs primaires.

Le système 1 comprend aussi des moyens 30 de détermination de la résolution optimale pour chaque bloc primaire. Les moyens 30 de détermination de la résolution optimale comprennent des moyens 31 de transformations supplémentaires permettant de réaliser au moins une seconde transformée, par exemple en ondelettes non décimée de l'image, ou, de manière générale, une transformation multi-résolution, des premiers moyens de calcul 32 permettant de calculer une amplitude des coefficients d'ondelettes pour chaque résolution, et des premiers moyens de comparaison 33 aptes à comparer les amplitudes des coefficients d'ondelettes et à sélectionner la résolution optimale correspondant à la résolution pour laquelle l'amplitude des coefficients d'ondelettes est maximale.

Le système 1 comprend enfin des moyens 40 de détection de la direction de contour prépondérante pour chacun desdits blocs primaires ou pour des blocs divisionnaires issus d'au moins une division des blocs primaires.

Les moyens 40 de détection de la direction de contour prépondérante d'un bloc comprennent des moyens de détection d'une direction principale du bloc comprenant des moyens 41 de création d'une séquence de pixels pour chaque direction possible dans ledit bloc, des seconds moyens de calcul 42 permettant de calculer un critère d'homogénéité pour chaque séquence de pixels, et des seconds moyens de comparaison 43 aptes à comparer les critères d'homogénéités d'un bloc et à sélectionner la direction principale dudit bloc, la direction principale correspondant à la direction pour laquelle le critère d'homogénéité de la séquence de pixels est (minimal).

Les moyens 41 de création d'une séquence de pixels pour une direction dans ledit bloc comprennent des moyens aptes à construire une séquence de pixels à partir de l'algorithme de Bresenham ou de tout autre algorithme chaînant des pixels voisins.

Les seconds moyens de calcul 42 comprennent des moyens réalisant un nombre de transformées en ondelettes orthogonales de la séquence correspondant au nombre correspondant à l'échelle du bloc auquel est soustrait un.

Les moyens 40 de détection de la direction de contour prépondérante d'un bloc comprennent également des moyens de test de satisfaction d'un critère de direction pour ledit bloc comprenant des troisièmes moyens de calculs 44 calculant un seuil d'homogénéité correspondant à l'intégration sur ledit bloc des valeurs absolues des gradients verticaux et horizontaux ou diagonaux de coefficients d'ondelettes, et des troisièmes moyens de comparaison 45 aptes à comparer le critère d'homogénéité délivré par les seconds moyens de comparaison au seuil d'homogénéité et de comparer la taille du bloc à un seuil minimal de taille de bloc.

Enfin, les moyens 40 de détection de la direction de contour prépondérante d'un bloc comprennent des moyens 46 de segmentation dudit bloc en blocs divisionnaires.

Tous ces moyens peuvent être réalisés par des modules logiciels au sein d'un processeur et / ou par des circuits logiques.

De nombreuses applications peuvent tirer parti d'une telle invention. Les principales applications sont :

- l'agrandissement d'une image. Les directions des contours donnent le sens dans lequel une interpolation peut être effectuée en limitant au maximum le risque de rendre floue l'image agrandie, et le risque d'effet d'escalier ;
- la restauration d'image (débruitage, défloutage, anti-aliasing). Le fait de connaître la direction des contours peut être très utile dans ce genre d'applications. En effet, pour le débruitage, la direction du contour représente la direction d'homogénéité maximale. Il est donc possible de distinguer les hautes fréquences correspondant à des contours, des fréquences correspondant au bruit à diminuer. Il est ainsi possible de limiter les pertes de piqué souvent imputables aux techniques de débruitage ou d'anti-aliasing.
- l'inpainting, consistant à remplir des zones de l'image ou le contenu a été effacé. L'utilisation de l'invention peut s'avérer efficace pour l'inpainting dans des textures ou dans des zones de l'image ou l'information est principalement portée par une direction. Il est ainsi possible de prolonger les motifs de la texture dans la direction détectée ;

- la compression qui peut être améliorée en prenant en compte la géométrie de l'image pour coder de manière plus efficace les objets de l'image.

**Revendications**

1.  Procédé de détection d'orientation des contours dans une image, comprenant :

    - une transformation initiale (100) de l'image en utilisant une transformée multi-résolution non décimée, **caractérisé en ce qu'**il comprend en outre les étapes suivantes:
    - une segmentation (110) de l'image en une pluralité de blocs,
    - une détermination (120) de la résolution optimale pour chaque bloc,
    - une détection (130) de la direction de contour prépondérante pour chacun desdits blocs.

2.  Procédé selon la revendication 1, dans lequel lesdits blocs constituent des blocs primaires résultant d'une segmentation primaire de l'image, et dans lequel on détecte la direction prépondérante de contour pour chacun desdits blocs primaires.

3.  Procédé selon la revendication 2, dans lequel lesdits blocs constituent des blocs divisionnaires résultant d'une division des blocs primaires, et dans lequel on détecte la direction prépondérante de contour pour chacun des blocs divisionnaires.

4.  Procédé selon l'une quelconque des revendications 1 à 3, dans lequel la détermination (120) de la résolution optimale comprend au moins une seconde transformée multi-résolution non décimée de l'image, chaque transformée multi-résolution non décimée de l'image correspondant à une échelle.

5.  Procédé selon la revendication 4, dans lequel la détermination (120) de la résolution optimale pour un bloc comprend un calcul d'une amplitude des coefficients de détails pour chaque résolution, et une sélection de la résolution optimale correspondant à la résolution pour laquelle l'amplitude des coefficients de détails est maximale.

6.  Procédé selon l'une des revendications 1 à 5, dans lequel la détection (130) de la direction de contour prépondérante d'un bloc comprend :

    a) une détection d'une direction principale du bloc,
    b) un test de satisfaction d'un critère de direction pour ledit bloc,
    c) une sélection de la direction principale comme direction prépondérante dudit bloc si le critère de direction est satisfait,
    d) une segmentation dudit bloc en quatre blocs divisionnaires, si le critère de direction n'est pas satisfait à l'étape b),
    e) une réitération des étapes a) à d) jusqu'à satisfaction du critère de direction.

7.  Procédé selon la revendication 6, dans lequel la détection d'une direction principale d'un bloc comprend :

    - une création d'une séquence de pixels pour chaque direction possible dans ledit bloc,
    - un calcul d'un critère d'homogénéité pour chaque séquence de pixels,
    - une sélection de la direction principale dudit bloc, la direction principale correspondant à la direction pour laquelle le critère d'homogénéité de la séquence de pixels correspond à une homogénéité maximale.

8.  Procédé selon la revendication 7, dans lequel le critère d'homogénéité d'une direction d'un bloc correspond à l'intégration sur ledit bloc des valeurs absolues des gradients de coefficients d'ondelettes le long de ladite direction.

9.  Procédé selon l'une des revendications 7 ou 8, dans lequel pour calculer le critère d'homogénéité d'une séquence, on réalise un nombre de transformée en ondelettes orthogonale de la séquence correspondant au nombre correspondant à l'échelle du bloc auquel est soustrait le nombre un.

10. Procédé selon l'une des revendications 6 à 9, dans lequel le critère de direction d'un bloc comprend une taille de bloc minimale et/ou un critère d'homogénéité inférieur à un seuil d'homogénéité.

**11.** Procédé selon l'une des revendications 7 à 10, dans lequel le seuil d'homogénéité d'un bloc correspond à l'intégration sur ledit bloc des valeurs absolues des gradients intrinsèques de coefficients de détails du bloc tels que les gradients verticaux et horizontaux de coefficients de détails.

**12.** Procédé selon l'une des revendications 7 à 10, dans lequel la création d'une séquence de pixels pour une direction dans ledit bloc est réalisée à partir d'un algorithme chaînant des pixels voisins.

**13.** Système de détection d'orientation des contours dans une image, comprenant
des moyens (10) de transformation initiale de l'image aptes à réaliser une transformation multi-résolution non décimée de l'image,
**caractérisé en ce qu'**il comprend en outre des moyens (20) de segmentation aptes à segmenter l'image en une pluralité de blocs,
des moyens (30) de détermination de la résolution optimale pour chaque bloc,
des moyens (40) de détection de la direction de contour prépondérante pour chacun desdits blocs.

**14.** Système selon la revendication 13, dans lequel les moyens (30) de détermination de la résolution optimale comprennent des moyens (31) de transformations supplémentaires aptes à réaliser au moins une seconde transformée multi-résolution non décimée de l'image, chaque transformée multi-résolution de l'image correspondant à une échelle.

**15.** Système selon la revendication 14, dans lequel les moyens (30) de détermination de la résolution optimale comprennent des premiers moyens de calcul (32) aptes à calculer une amplitude des coefficients de détails pour chaque résolution, et des premiers moyens de comparaison (33) aptes à comparer les amplitudes des coefficients de détails et à sélectionner la résolution optimale correspondant à la résolution pour laquelle l'amplitude des coefficients de détails est maximale.

**16.** Système selon l'une des revendications 13 à 15, dans lequel les moyens (40) de détection de la direction de contour prépondérante d'un bloc comprennent des moyens de détection d'une direction principale du bloc, des moyens de test de satisfaction d'un critère de direction pour ledit bloc, des moyens (46) de segmentation dudit bloc en blocs divisionnaires.

**17.** Système selon la revendication 16, dans lequel les moyens de détection d'une direction principale d'un bloc comprennent des moyens (41) de création d'une séquence de pixels pour chaque direction possible dans ledit bloc, des seconds moyens de calcul (42) aptes à calculer un critère d'homogénéité pour chaque séquence de pixels, des seconds moyens de comparaison (43) aptes à comparer les critères d'homogénéités d'un bloc et à sélectionner la direction principale dudit bloc, la direction principale correspondant à la direction pour laquelle le critère d'homogénéité de la séquence de pixels correspond à une homogénéité maximale.

**18.** Système selon la revendication 17, dans lequel les seconds moyens de calcul (42) comprennent des moyens aptes à réaliser un nombre de transformée en ondelettes orthogonale de la séquence correspondant au nombre correspondant à l'échelle du bloc auquel est soustrait le nombre un.

**19.** Système selon l'une des revendications 17 ou 18, dans lequel les moyens de test de satisfaction comprennent des troisièmes moyens de calculs (44) aptes à calculer un seuil d'homogénéité correspondant à l'intégration sur ledit bloc des valeurs absolues des gradients intrinsèques de coefficients de détails tels que des gradients verticaux et horizontaux de coefficients de détails.

**20.** Système selon l'une des revendications 17 à 19, dans lequel les moyens de test de satisfaction comprennent des troisièmes moyens de comparaison (45) aptes à comparer le critère d'homogénéité délivré par les seconds moyens de comparaison (43) au seuil d'homogénéité et à comparer la taille du bloc à un seuil minimal de taille de bloc.

**21.** Système selon l'une des revendications 17 à 20, dans lequel les moyens de création d'une séquence de pixels pour une direction dans ledit bloc comprennent des moyens aptes à construire une séquence de pixels à partir d'un algorithme chaînant des pixels voisins.

**Patentansprüche**

1. Verfahren zur Erfassung der Orientierung von Kanten in einem Bild, umfassend:

   - eine ursprüngliche Umformung (100) des Bildes unter Verwendung einer nicht dezimierten Multiauflösungstransformierten,
   **dadurch gekennzeichnet, dass** es ferner die folgenden Schritte umfasst:
   - eine Segmentierung (110) des Bildes in eine Vielzahl von Blöcken,
   - eine Bestimmung (120) der optimalen Auflösung für jeden Block,
   - eine Erfassung (130) der überwiegenden Kantenausrichtung für jeden der Blöcke.

2. Verfahren nach Anspruch 1, bei dem die Blöcke primäre Blöcke darstellen, die sich aus einer primären Segmentierung des Bildes ergeben, und bei dem die überwiegende Kantenausrichtung für jeden der primären Blöcke erfasst wird.

3. Verfahren nach Anspruch 2, bei dem die Blöcke Teilungsblöcke darstellen, die sich aus einer Teilung der primären Blöcke ergeben, und bei dem die überwiegende Kantenausrichtung für jeden der Teilungsblöcke erfasst wird.

4. Verfahren nach einem der Ansprüche 1 bis 3, bei dem die Bestimmung (120) der optimalen Auflösung mindestens eine zweite nicht dezimierte Multiauflösungstransformierte des Bildes umfasst, wobei jede nicht dezimierte Multiauflösungstransformierte des Bildes einer Skala entspricht.

5. Verfahren nach Anspruch 4, bei dem die Bestimmung (120) der optimalen Auflösung für einen Block eine Berechnung einer Amplitude der Detailkoeffizienten für jede Auflösung und eine Auswahl der optimalen Auflösung entsprechend der Auflösung, bei der die Amplitude der Detailkoeffizienten maximal ist, umfasst.

6. Verfahren nach einem der Ansprüche 1 bis 5, bei dem die Erfassung (130) der überwiegenden Kantenausrichtung eines Blocks Folgendes umfasst:

   a) eine Erfassung einer Hauptausrichtung des Blocks,
   b) einen Test der Erfüllung eines Ausrichtungskriteriums für den Block,
   c) eine Auswahl der Hauptrichtung als überwiegende Richtung des Blocks, wenn das Ausrichtungskriterium erfüllt ist,
   d) eine Segmentierung des Blocks in vier Teilungsblöcke, wenn das Ausrichtungskriterium in Schritt b) nicht erfüllt ist,
   e) eine Reiteration der Schritte a) bis d) bis zur Erfüllung des Ausrichtungskriteriums.

7. Verfahren nach Anspruch 6, bei dem die Erfassung einer Hauptausrichtung eines Blocks Folgendes umfasst:

   - eine Erzeugung einer Pixelsequenz für jede mögliche Ausrichtung im Block,
   - eine Berechnung eines Homogenitätskriteriums für jede Pixelsequenz,
   - eine Auswahl der Hauptausrichtung des Blocks, wobei die Hauptausrichtung der Ausrichtung entspricht, bei der das Homogenitätskriterium der Pixelsequenz einer maximalen Homogenität entspricht.

8. Verfahren nach Anspruch 7, bei dem das Homogenitätskriterium einer Ausrichtung eines Blocks der Integration der Absolutwerte der Gradienten von Wellenkoeffizienten entlang der Ausrichtung in den Block entspricht.

9. Verfahren nach einem der Ansprüche 7 oder 8, bei dem für die Berechnung des Homogenitätskriteriums einer Sequenz eine Zahl einer orthogonalen Wellentransformierten der Sequenz entsprechend der Zahl entsprechend der Skala des Blocks, von dem die Zahl eins abgezogen wird, erstellt wird.

10. Verfahren nach einem der Ansprüche 6 bis 9, bei dem das Ausrichtungskriterium eines Blocks eine Mindestblockgröße und/oder ein Homogenitätskriterium kleiner als eine Homogenitätsschwelle umfasst.

11. Verfahren nach einem der Ansprüche 7 bis 10, bei dem die Homogenitätsschwelle eines Blocks der Integration der Absolutwerte der inneren Gradienten von Detailkoeffizienten des Blocks, wie der vertikalen und horizontalen Gradienten von Detailkoeffizienten, in den Block entspricht.

12. Verfahren nach einem der Ansprüche 7 bis 10, bei dem die Erzeugung einer Pixelsequenz für eine Ausrichtung in dem Block aus einem Algorithmus, der benachbarte Pixel aneinanderreiht, durchgeführt wird.

13. System zur Erfassung der Kantenausrichtung in einem Bild, umfassend
Mittel (10) zur ursprünglichen Umformung des Bildes, die geeignet sind, eine nicht dezimierte Multiauflösungsumformung des Bildes durchzuführen, **dadurch gekennzeichnet, dass** es ferner Mittel (20) zur Segmentierung umfasst, die geeignet sind, das Bild in eine Vielzahl von Blöcken zu segmentieren, Mittel (30) zur Bestimmung der optimalen Auflösung für jeden Block,
Mittel (40) zur Erfassung der überwiegenden Kantenausrichtung für jeden der Blöcke.

14. System nach Anspruch 13, bei dem die Mittel (30) zur Bestimmung der optimalen Auflösung zusätzliche Umformungsmittel (31) umfassen, die geeignet sind, mindestens eine zweite nicht dezimierte Multiauflösungstransformierte des Bildes durchzuführen, wobei jede Multiauflösungstransformierte des Bildes einer Skala entspricht.

15. System nach Anspruch 14, bei dem die Mittel (30) zur Bestimmung der optimalen Auflösung erste Berechnungsmittel (32), die geeignet sind, eine Amplitude der Detailkoeffizienten für jede Auflösung zu berechnen, und erste Vergleichsmittel (33) umfassen, die geeignet sind, die Amplituden der Detailkoeffizienten zu vergleichen und die optimale Auflösung auszuwählen, die der Auflösung entspricht, bei der die Amplitude der Detailkoeffizienten maximal ist.

16. System nach einem der Ansprüche 13 bis 15, bei dem die Mittel (40) zur Erfassung der überwiegenden Kantenausrichtung eines Blocks, Mittel zur Erfassung einer Hauptausrichtung des Blocks, Mittel zum Testen der Erfüllung eines Ausrichtungskriteriums für den Block und Mittel (46) zur Segmentierung des Blocks in Teilungsblöcke umfassen.

17. System nach Anspruch 16, bei dem die Mittel zur Erfassung einer Hauptausrichtung eines Blocks Mittel (41) zur Erzeugung einer Pixelsequenz für jede mögliche Ausrichtung im Block, zweite Berechnungsmittel (42), die geeignet sind, ein Homogenitätskriterium für jede Pixelsequenz zu berechnen, zweite Vergleichsmittel (43), die geeignet sind, die Homogenitätskriterien eines Blocks zu vergleichen und die Hauptausrichtung des Blocks auszuwählen, umfassen, wobei die Hauptausrichtung der Ausrichtung entspricht, bei der das Homogenitätskriterium der Pixelsequenz einer maximalen Homogenität entspricht.

18. System nach Anspruch 17, bei dem die zweiten Berechnungsmittel (42) Mittel umfassen, die geeignet sind, eine Zahl einer orthogonalen Wellentransformierten der Sequenz entsprechend der Zahl entsprechend der Skala des Blocks, von dem die Zahl eins abgezogen wird, zu erzeugen.

19. System nach einem der Ansprüche 17 oder 18, bei dem die Erfüllungstestmittel dritte Berechnungsmittel (44) umfassen, die geeignet sind, eine Homogenitätsschwelle entsprechend der Integration der Absolutwerte der inneren Gradienten von Detailkoeffizienten in den Block, wie der vertikalen und horizontalen Gradienten von Detailkoeffizienten, zu berechnen.

20. System nach einem der Ansprüche 17 bis 19, bei dem die Erfüllungstestmittel dritte Vergleichsmittel (45) umfassen, die geeignet sind, das von den zweiten Vergleichsmitteln (43) gelieferte Homogenitätskriterium mit der Homogenitätsschwelle zu vergleichen und die Größe des Blocks mit einer minimalen Blockgrößenschwelle zu vergleichen.

21. System nach einem der Ansprüche 17 bis 20, bei dem die Mittel zur Erzeugung einer Pixelsequenz für eine Ausrichtung im Block Mittel umfassen, die geeignet sind, eine Pixelsequenz aus einem Algorithmus, der benachbarte Pixel aneinanderreiht, zu erstellen.

## Claims

1. Method for detecting orientation of the contours in an image, comprising

   - an initial transformation (100) of the image using a non-decimated multi-resolution transform,
   **characterized in that** it also comprises the following steps:
   - a segmentation (110) of the image into a plurality of blocks,
   - a determination (120) of the optimal resolution for each block,
   - a detection (130) of the predominant direction of contour for each of the said blocks.

**2.** Method according to Claim 1, in which the said blocks constitute primary blocks resulting from a primary segmentation of the image, and in which the predominant contour direction is detected for each of the said primary blocks.

**3.** Method according to Claim 2, in which the said blocks constitute divisional blocks resulting from a division of the primary blocks, and in which the predominant contour direction is detected for each of the divisional blocks.

**4.** Method according to any one of Claims 1 to 3, in which the determination (120) of the optimal resolution comprises at least one second non-decimated multi-resolution transform of the image, each non-decimated multi-resolution transform of the image corresponding to a scale.

**5.** Method according to Claim 4, in which the determination (120) of the optimal resolution for a block comprises a calculation of an amplitude of the detail coefficients for each resolution, and a selection of the optimal resolution corresponding to the resolution for which the amplitude of the detail coefficients is a maximum.

**6.** Method according to one of Claims 1 to 5, in which the detection (130) of the predominant direction of contour of a block comprises:

a) a detection of a principal direction of the block,
b) a test of satisfaction of a direction criterion for the said block,
c) a selection of the principal direction as predominant direction of the said block if the direction criterion is satisfied,
d) a segmentation of the said block into four divisional blocks, if the direction criterion is not satisfied in step b),
e) a reiteration of steps a) to d) until the direction criterion is satisfied.

**7.** Method according to Claim 6, in which the detection of a principal direction of a block comprises:

- a creation of a sequence of pixels for each possible direction in the said block,
- a calculation of a homogeneity criterion for each sequence of pixels,
- a selection of the principal direction of the said block, the principal direction corresponding to the direction for which the criterion of homogeneity of the sequence of pixels corresponds to a maximum homogeneity.

**8.** Method according to Claim 7, in which the criterion of homogeneity of a direction of a block corresponds to the integration over the said block of the absolute values of the wavelet coefficient gradients along the said direction.

**9.** Method according to one of Claims 7 or 8, in which to calculate the homogeneity criterion for a sequence, a number of orthogonal wavelet transforms of the sequence corresponding to the number corresponding to the scale of the block from which one is subtracted is carried out.

**10.** Method according to one of Claims 6 to 9, in which the direction criterion for a block comprises a minimum block size and/or a criterion of homogeneity below a homogeneity threshold.

**11.** Method according to one of Claims 7 to 10, in which the homogeneity threshold for a block corresponds to the integration over the said block of the absolute values of the intrinsic gradients of detail coefficients of the block such as the vertical and horizontal gradients of detail coefficients.

**12.** Method according to one of Claims 7 to 10, in which the creation of a sequence of pixels for a direction in the said block is carried out on the basis of an algorithm chaining together the neighbouring pixels.

**13.** System for detecting orientation of the contours in an image, comprising

- means (10) of initial transformation of the image which are able to carry out a non-decimated multi-resolution transformation of the image, **characterized in that** it also comprises:
- segmentation means (20) able to segment the image into a plurality of blocks,
- means (30) for determining the optimal resolution for each block,
- means (40) for detecting the predominant direction of contour for each of the said blocks.

**14.** System according to Claim 13, in which the means (30) for determining the optimal resolution comprise means (31) of additional transformations able to carry out at least one second non-decimated multi-resolution transform of the image, each multi-resolution transform of the image corresponding to a scale.

15. System according to Claim 14, in which the means (30) for determining the optimal resolution comprise first calculation means (32) able to calculate an amplitude of the detail coefficients for each resolution, and first comparison means (33) able to compare the amplitudes of the detail coefficients and to select the optimal resolution corresponding to the resolution for which the amplitude of the detail coefficients is a maximum.

16. System according to one of Claims 13 to 15, in which the means (40) for detecting the predominant direction of contour of a block comprise means for detecting a principal direction of the block, means for testing satisfaction of a direction criterion for the said block, means (46) for segmenting the said block into divisional blocks.

17. System according to Claim 16, in which the means for detecting a principal direction of a block comprise means (41) for creating a sequence of pixels for each possible direction in the said block, second calculation means (42) able to calculate a homogeneity criterion for each sequence of pixels, second comparison means (43) able to compare the criteria of homogeneities of a block and to select the principal direction of the said block, the principal direction corresponding to the direction for which the criterion of homogeneity of the sequence of pixels corresponds to a maximum homogeneity.

18. System according to Claim 17, in which the second calculation means (42) comprise means able to carry out a number of orthogonal wavelet transforms of the sequence corresponding to the number corresponding to the scale of the block from which one is subtracted.

19. System according to one of Claims 17 or 18, in which the satisfaction testing means comprise third calculation means (44) able to calculate a homogeneity threshold corresponding to the integration over the said block of the absolute values of the intrinsic gradients of detail coefficients such as vertical and horizontal gradients of detail coefficients.

20. System according to one of Claims 17 to 19, in which the satisfaction testing means comprise third comparison means (45) able to compare the homogeneity criterion delivered by the second comparison means (43) with the homogeneity threshold and to compare the size of the block with a minimum threshold of block size.

21. System according to one of Claims 17 to 20, in which the means for creating a sequence of pixels for a direction in the said block comprise means able to construct a sequence of pixels on the basis of an algorithm chaining together the neighbouring pixels

## FIG.1

## FIG.2

| | |
|---|---|
| 100 | Transformée initiale en ondelettes non décimée |
| 110 | Segmentation de l'image en bloc primaire |
| 120 | Détermination de la résolution optimale pour chaque bloc primaire |
| 130 | Détection de la direction de contour prépondérante pour chaque bloc |

# FIG.3

```
┌─────────────────────────────────────────────────────────────┐
│                                                               │
│  121──┤  2^{nde} transformée en ondelettes non décimée    │   │
│                                                               │
│                              ↓                                │
│                                                               │
│  122──┤  3^{e} transformée en ondelettes non décimée      │   │
│                                                               │
│                              ↓                                │
│                                                               │
│  123──┤  Calcul d'amplitude pour chaque résolution       │    │
│           pour un bloc                                        │
│                                                               │
│                              ↓                                │
│                                                               │
│  124──┤  Comparaison des amplitudes de chaque            │     │
│           résolution d'un bloc                               │
│                                                               │
│                              ↓                                │
│                                                               │
│  125──┤  Résolution optimal pour un bloc                 │     │
│                                                               │
└─────────────────────────────────────────────────────────────┘
```

# FIG.4

```
┌─────────────────────┐
│ Création d'une       │
│ séquence de pixel    │──131
│ selon une direction  │
└─────────────────────┘
          │
          ▼
┌─────────────────────┐
│ Calcul du $G_{dir}$ de la │──132
│ séquence            │
└─────────────────────┘
          │
          ▼
        133
     ◇─────────◇
    ╱ Calcul pour  ╲   non
   ◇ toutes les     ◇────────┐
    ╲ directions ? ╱          │
     ◇─────────◇              │
          │ oui               │
          ▼                   │
┌─────────────────────┐       │
│ Comparaison des $G_{dir}$│──134  │
└─────────────────────┘       │
          │                   │
          ▼                   │
┌─────────────────────┐       │
│ Sélection de la direction│──135 │
│ principale          │       │
└─────────────────────┘       │
          │                   │
          ▼                   │
┌─────────────────────┐       │
│ Calcul de $G_{ort}$     │──136  │
└─────────────────────┘       │
          │
          ▼
        137              138                    139
     ◇─────────◇      ◇─────────◇        ┌─────────────────────┐
    ╱           ╲ non ╱           ╲  non  │ Segmentation du bloc │
   ◇ $G_{dir} \leqq \frac{G_{ort}}{\alpha}$ ? ◇────◇ Bloc min ? ◇──────│                     │
    ╲           ╱     ╲           ╱       └─────────────────────┘
     ◇─────────◇      ◇─────────◇
       │ oui            │ oui
       ▼                │
┌─────────────────────┐
│ Sélection de la direction│──140
│ prépondérante       │
└─────────────────────┘
          │
          ▼
```

## FIG.5a

## FIG.5b

## FIG.6

FIG.7a

FIG.7b

## FIG.8a

| 1 | 2 | 3 | 4 |
|---|---|---|---|
| 5 | 6 | 7 | 8 |
| 9 | 10 | 11 | 12 |
| 13 | 14 | 15 | 16 |

## FIG.8b

| 1 | 2 | 3 | 5 | 4 | 6 | 7 | 9 | 8 | 10 | 11 | 13 | 12 | 14 | 15 | 16 |
|---|---|---|---|---|---|---|---|---|----|----|----|----|----|----|----|

## FIG.9a

## FIG.9b

# FIG.10

1

```
┌─────────────────────────┐
│  Moyens de transformation │  10
└─────────────────────────┘
            │
            ▼
┌─────────────────────────┐
│  Moyens de segmentation  │  20
│        primaire          │
└─────────────────────────┘
            │
            ▼
┌ ─ ─ ─ ─ ─ ─ ─ ─ ─ ─ ─ ─ ─ ─ ─ ─ ─ ┐
  ┌─────────────────────────┐
│ │  Moyens de transformation │  31 │
  │       supplémentaire     │
│ └─────────────────────────┘     │  30
            │
│           ▼            33        │
  ┌──────────────────┐  ┌────────┐
│ │ Moyens de calcul 1 │→│ Comp 1 │ │  32
  └──────────────────┘  └────────┘
└ ─ ─ ─ ─ ─ ─ ─ ─ ─ ─ ─ ─ ─ ─ ─ ─ ─ ┘
                            │
                            ▼
┌ ─ ─ ─ ─ ─ ─ ─ ─ ─ ─ ─ ─ ─ ─ ─ ─ ─ ─ ─ ─ ─ ─ ─ ┐
  ┌─────────────────────────┐
│ │  Création d'une séquence  │←───────────┐ │  41
  └─────────────────────────┘            │
│           │                            │  │
            ▼                            │
│ ┌─────────────────────────┐           │  │
  │    Moyens de calcul 2     │           │  42
│ └─────────────────────────┘           │  │
            │                            │
│           ▼                            │  │ 40
      ┌──────────┐                       │
│  43  │  Comp 2  │                       │  │
      └──────────┘                       │
│           │                            │  │
            ▼                            │
│ ┌─────────────────────────┐           │  │
  │    Moyens de calcul 3     │           │  44
│ └─────────────────────────┘           │  │
            │                            │           46
│           ▼                            │  │
      ┌──────────┐   ┌────────────────────┐
│  45  │  Comp 3  │──→│    Segmentation    │ │
      └──────────┘   └────────────────────┘
│           │                               │
└ ─ ─ ─ ─ ─ ─│─ ─ ─ ─ ─ ─ ─ ─ ─ ─ ─ ─ ─ ─ ─ ─┘
            ▼
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007059795 A
- US 6167150 A
- US 6788826 B1
- WO 2004104928 A1

**Littérature non-brevet citée dans la description**

- **JL STARCK et al.** The curvelet transform for image denoising. *IEEE,* 06 Juin 2002, vol. 11
- *Orientation diffusions,* 03 Mars 1998, vol. 7